(19) Europäisches Patentamt
European Patent Office
Office européen des brevets

(11) **EP 4 714 635 A1**

## (12) EUROPÄISCHE PATENTANMELDUNG

(43) Veröffentlichungstag:
**25.03.2026 Patentblatt 2026/13**

(21) Anmeldenummer: 25202854.3

(22) Anmeldetag: **17.09.2025**

(51) Internationale Patentklassifikation (IPC):
*B29C 64/00* (2017.01) *B33Y 10/00* (2015.01)
*B33Y 70/00* (2020.01)

(52) Gemeinsame Patentklassifikation (CPC):
(C-Sets verfügbar)
**B33Y 10/00; B33Y 70/00; B33Y 70/10;**
B29C 64/118; C08K 2201/001; C08K 2201/003;
C08K 2201/004 (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **19.09.2024 DE 102024127080**

(71) Anmelder: **Fiberthree GmbH
64293 Darmstadt Hessen (DE)**

(72) Erfinder:
• **Wendt, Felix
10405 Berlin (DE)**
• **Schlörke, Johannes
63322 Rödermark (DE)**
• **Philipp, Klaus
64293 Darmstadt (DE)**
• **Queck, Christoph
67304 Eisenberg (DE)**

(74) Vertreter: **Launhardt, Thomas
Parkstraße 11-13
65549 Limburg (DE)**

(54) **LEITFÄHIGES POLYMERKOMPOSIT, FILAMENT, BAUTEIL UND 3D-DRUCKVERFAHREN**

(57) Die vorliegende Offenbarung betrifft ein Polymerkomposit mit einer elektrischen Volumenleitfähigkeit zwischen $10^{-7}$ S/cm und 1 S/cm. In einer Ausführungsform enthält das Polymerkomposit ein vorzugsweise thermoplastisches Polymer, Kohlenstofffasern und Kohlenstoffnanostrukturen oder besteht daraus. In einer weiteren Ausführungsform enthält das Polymerkomposit ein vorzugsweise thermoplastisches Polymer, Kohlenstoff-fasern und Rußpartikel oder besteht daraus. In einer nochmals weiteren Ausführungsform enthält das Polymerkomposit ein vorzugsweise thermoplastisches Polymer, Kohlenstofffasern, Kohlenstoffnanostrukturen und Rußpartikel oder besteht daraus. Die vorliegende Offenbarung betrifft ferner ein Filament mit einem solchen Polymerkomposit, ein daraus hergestelltes Bauteil und ein 3D-Druckverfahren.

**EP 4 714 635 A1**

(52) Gemeinsame Patentklassifikation (CPC): (Forts.)

C-Sets
**C08K 3/04, C08L 77/02;**
**C08K 3/041, C08L 77/02;**
**C08K 3/046, C08L 77/02;**
**C08K 7/06, C08L 77/02**

**Beschreibung**

<u>Technisches Gebiet</u>

Die vorliegende Offenbarung betrifft ein leitfähiges Polymerkomposit und insbesondere ein Filament mit einem solchen Polymerkomposit sowie ein daraus hergestelltes Bauteil. Weiter betrifft die vorliegende Offenbarung ein 3D-Druckverfahren.

Polymerkomposite sind Verbundmaterialien mit einer Polymerkomponente. Sie kommen als Werkstoff beispielsweise bei der additiven Fertigung, auch bekannt als dreidimensionales Drucken, zum Einsatz und sind dort in den letzten Jahren zunehmend beliebter geworden. Häufig liegen die Polymerkomposite in einer Drahtform, dem sogenannten Filament, vor.

Die Polymerkomposite umfassen neben der Polymerkomponente wenigstens eine weitere Materialkomponente und kombinieren günstige Materialeigenschaften ihrer Komponenten. Durch die wenigstens eine weitere Komponente lassen sich beispielsweise Materialeigenschaften erreichen, die die Polymerkomponente alleine nicht aufweist oder zumindest nicht in der gewünschten Ausprägung aufweist. Dadurch können funktionale Eigenschaften in das additive Fertigen integriert werden, welche ansonsten erst nach dem additiven Fertigen durch eine aufwendige Nachbehandlung des additiv gefertigten Gegenstands oder eine Montage von ergänzenden Bauteilen erreicht würden.

Beispielsweise besteht ein Bedarf an solchen Polymerkompositen, welche elektrisch leitfähig sind. Die Fähigkeit, leitfähige Komponenten in den 3D-Druck eines Gegenstandes zu integrieren, kann ein Potenzial für eingebettete Sensorik und Anwendungen in der Elektronik bieten. Es ist jedoch zu beobachten, dass elektrisch leitfähige Polymerkomposite häufig Defizite in der Druckbarkeit aufweisen, beispielsweise indem die Maßgenauigkeit des gedruckten Gegenstands nicht zufriedenstellend ist. Weiter ist zu beobachten, dass Bauteile, welche mit elektrisch leitfähigen Polymerkompositen gefertigt sind, häufig Defizite in der Bauteilfestigkeit aufweisen.

Auch vor diesem Hintergrund besteht ein großes Interesse, verbesserte Materialen für das additive Fertigen zu entwickeln. Die verbesserten Materialien sollen eine elektrische Leitfähigkeit aufweisen, die den damit additiv gefertigten Gegenstand eine elektrische Leitfähigkeit in einer solchen Größenordnung aufweisen lassen, dass eine Nutzung des Gegenstandes in der Elektronik und/oder Sensorik ermöglicht ist. Zugleich sollen die verbesserten Materialen in Bezug auf den zu druckenden Gegenstand eine wenigstens ausreichende geometrische Treue und Bauteilfestigkeit gewährleisten.

<u>Konzepte</u>

Eine grundlegende Verbesserung bietet eine Ausführungsform eines Polymerkomposits, welches ein vorzugsweise thermoplastisches Polymer, Kohlenstofffasern und Kohlenstoffnanostrukturen enthält oder daraus besteht und eine elektrische Volumenleitfähigkeit zwischen $10^{-7}$ S/cm und 1 S/cm aufweist. Insbesondere war bei dieser Ausführungsform das Polymerkomposit frei von Rußpartikeln. Es hat sich gezeigt, dass ein solches Polymerkomposit einen 3D-Druck mit ausreichender geometrischer Treue und ausreichender Bauteilfestigkeit eines damit gedruckten Gegenstands ermöglicht und dass der gedruckte Gegenstand eine elektrische Leitfähigkeit in einem für Anwendungen in der Elektronik und/oder Sensorik nutzbaren Bereich erreicht.

Dies wurde durch die genutzten Kohlenstoffkomponenten ermöglicht, durch welche eine verbesserte elektrische Leitfähigkeit erzielt werden konnte. Es wurde festgestellt, dass die Kohlenstofffasern in Kombination mit den Kohlenstoffnanostrukturen ein verbessertes Perkolationsnetzwerk erzeugen, da die Kohlenstoffnanostrukturen als Brücken zwischen den einzelnen Kohlenstofffasern wirken und damit die Ausbildung einer durchgängig leitfähigen Struktur im Polymer begünstigen. Dadurch kann der Anteil der Kohlenstoffkomponenten in der Summe gegenüber dem Anteil der Polymerkomponente reduziert werden, um eine elektrische Leitfähigkeit in der angestrebten Größenordnung zu erreichen, wodurch die Eigenschaften der Polymerkomponente ausgeprägter vorliegen, welche sich positiv auf die Druckbarkeit und Bauteilfestigkeit auswirken. Denn der höhere Anteil der Polymerkomponente verbessert die geometrische Treue beim Drucken und die Bauteilfestigkeit des gedruckten Gegenstands.

Eine grundlegende Verbesserung bietet auch eine Ausführungsform eines Polymerkomposits, welches ein vorzugsweise thermoplastisches Polymer, Kohlenstofffasern und Rußpartikel enthält oder daraus besteht und eine elektrische Volumenleitfähigkeit zwischen $10^{-7}$ S/cm und 1 S/cm aufweist. Insbesondere war bei dieser Ausführungsform das Polymerkomposit frei von Kohlenstoffnanostrukturen. Es wurde festgestellt, dass die vorstehend im Zusammenhang mit den Kohlenstoffnanostrukturen beschriebenen Wirkungen auch vorliegen, wenn Rußpartikel anstelle der Kohlenstoffnanostrukturen genutzt werden. Insofern ergeben sich auch bei diesem Polymerkomposit die vorstehend beschriebenen Vorteile.

Eine weitergehende Verbesserung bietet eine Ausführungsform eines Polymerkomposits, welches ein vorzugsweise thermoplastisches Polymer, Kohlenstofffasern, Kohlenstoffnanostrukturen und Rußpartikel enthält oder daraus besteht und eine elektrische Volumenleitfähigkeit zwischen $10^{-7}$ S/cm und 1 S/cm aufweist. Dieses Polymerkomposit ermöglicht einen 3D-Druck mit einer weiter verbesserten geometrischen Treue und einer weiter verbesserten Bauteilfestigkeit bei gleicher oder vergleichbarer elektrischer Leitfähigkeit wie bei den vorstehend beschriebenen Polymerkompositen.

Die verbesserte Wirkung ist auf eine weiter verbesserte elektrische Leitfähigkeit zurückzuführen, die durch das Vorhandensein der Kohlenstoffnanostrukturen und der Rußpartikel bewirkt wird. Es wurde festgestellt, dass durch das gemeinsame Vorliegen der Kohlenstoffnanostrukturen und der Rußpartikel eine Brückenbildung zwischen benachbarten Kohlenstofffasern noch verstärkt wird und sich dadurch eine weiter verbesserte elektrische Leitfähigkeit ergibt. Dadurch kann der Anteil der Kohlenstoffkomponenten in der Summe gegenüber dem Anteil der Polymerkomponente weiter reduziert werden, um eine elektrische Leitfähigkeit in der angestrebten Größenordnung zu erreichen. Dadurch wiederum sind die Eigenschaften der Polymerkomponente ausgeprägter, mit der Folge, dass sich die geometrische Treue beim 3-Druck und die Bauteilfestigkeit des gedruckten Gegenstands verbessert.

Unter dem Begriff "Faser" ist in der vorliegenden Offenbarung insbesondere ein längliches, vorzugsweise lineares Gebilde zu verstehen. Insbesondere ist die Faser dünn im Verhältnis zu ihrer Länge. Insbesondere ist die Faser flexibel. Beispielsweise handelt es sich bei der Faser um einen länglichen Vollkörper. Grundsätzlich kann es sich bei der Faser auch um einen länglichen Hohlkörper handeln.

Unter "Fasern" sind in der vorliegenden Offenbarung insbesondere eine Vielzahl von Fasern zu verstehen. Die Fasern können einen länglichen Vollkörper aufweisen, insbesondere ausschließlich einen länglichen Vollkörper aufweisen. Auch können die Fasern einen länglichen Hohlkörper aufweisen, insbesondere ausschließlich einen länglichen Hohlkörper aufweisen. Grundsätzlich kann es auch sein, dass die Fasern einen Anteil von Fasern mit länglichem Vollkörper und einen Anteil von Fasern mit länglichem Hohlkörper aufweisen oder daraus bestehen. Unter dem Begriff "Kohlenstofffasern" ist in der vorliegenden Offenbarung insbesondere zu verstehen, dass die Fasern aus Kohlenstoff bestehen oder Kohlenstoff aufweisen.

Insbesondere weisen die Kohlenstofffasern eine mittlere Faserlänge zwischen 20 $\mu$m und 2 mm, insbesondere zwischen 20 $\mu$m und 400 $\mu$m, insbesondere zwischen 40 $\mu$m und 150 $\mu$m, bevorzugt zwischen 60 $\mu$m und 100 $\mu$m auf. Beispielsweise hat die mittlere Faserlänge einen Wert von 60 $\mu$m, 65 $\mu$m, 70 $\mu$m, 75 $\mu$m, 80 $\mu$m, 85 $\mu$m, 90 $\mu$m, 95 $\mu$m oder 100 $\mu$m. Es wurde festgestellt, dass eine solche mittlere Faserlänge der Kohlenstofffasern die elektrische Leitfähigkeit begünstigt und zudem auf die Druckbarkeit des Polymerkomposits und die Bauteilfestigkeit des gedruckten Gegenstands eine positive Wirkung hat.

Insbesondere weisen die Kohlenstofffasern einen Durchmesser zwischen 5 $\mu$m und 20 $\mu$m, insbesondere zwischen 5 $\mu$m und 15 $\mu$m, bevorzugt zwischen 7 $\mu$m und 10 $\mu$m auf. Beispielsweise hat der Durchmesser einen Wert von 7 $\mu$m, 8 $\mu$m, 9 $\mu$m oder 10 $\mu$m. Es wurde festgestellt, dass eine solcher Durchmesser der Kohlenstofffasern die elektrische Leitfähigkeit begünstigt und zudem auf die Druckbarkeit des Polymerkomposits und die Bauteilfestigkeit des gedruckten Gegenstands eine positive Wirkung hat.

Insbesondere haben die Kohlenstofffasern einen Anteil zwischen 5 % und 26 %, insbesondere zwischen 7 % und 23 %, bevorzugt zwischen 8 % und 21 %, bezogen auf 100 Massenanteile des Polymers und trockenem Polymerkomposit. Beispielsweise liegt der Anteil der Kohlenstofffasern bei 8 %, 9 %, 10 %, 11 %, 12 %, 13 %, 14 %, 15 %, 16 %, 17 %, 18 %, 19 %, 20 % oder 21 %, bezogen auf 100 Massenanteile des Polymers und trockenem Polymerkomposit. Untersuchungen haben gezeigt, dass durch einen solchen Anteil der Kohlenstofffasern die vorstehend beschriebenen positiven Effekte erreicht werden.

Insbesondere haben die Kohlenstoffnanostrukturen einen Anteil zwischen 0,1 % und 12 %, insbesondere zwischen 0,5 % und 10 %, bevorzugt zwischen 1 % und 8 %, bezogen auf 100 Massenanteile des Polymers und trockenem Polymerkomposit. Beispielsweise liegt der Anteil der Kohlenstoffnanostrukturen bei 1 %, 2 %, 3 %, 4 %, 5 %, 6 %, 7 % oder 8 %, bezogen auf 100 Massenanteile des Polymers und trockenem Polymerkomposit. Untersuchungen haben gezeigt, dass durch einen solchen Anteil der Kohlenstoffnanostrukturen die vorstehend beschriebenen positiven Effekte erreicht werden.

Die positiven Effekte konnten festgestellt werden, wenn die Kohlenstoffnanostrukturen als Röhren ausgebildet waren, also als Nanoröhren vorlagen. Die positiven Effekte konnten auch festgestellt werden, wenn alternativ die Kohlenstoffnanostrukturen als Flocken ausgebildet waren, also als Nanoflocken vorlagen. Ebenso konnten die positiven Effekte bei solchen Kohlenstoffnanostrukturen festgestellt werden, welche in einer Mischung oder einem Gemenge, enthaltend oder bestehend aus Nanoröhren und Nanoflocken, vorlagen.

Unter dem Begriff "Nanostrukturen" sind in der vorliegenden Offenbarung solche Strukturen zu verstehen, welche eine Strukturgröße von weniger als 100 nm aufweisen. Unter dem Begriff "Kohlenstoffnanostrukturen" sind Nanostrukturen zu verstehen, welche aus Kohlenstoff bestehen oder Kohlenstoff enthalten, beispielsweise einen Kohlenstoffanteil von über 97 Gew.-% haben.

Unter dem Begriff "Nanoröhren" sind in der vorliegenden Offenbarung längliche Hohlkörper mit einem Durchmesser von weniger als 100 nm zu verstehen, beispielsweise einen Durchmesser zwischen 5 nm und 70 nm, insbesondere zwischen 10 nm und 50 nm aufweisen. Unter dem Begriff "Kohlenstoffnanoröhren", auch bezeichnet als CNTs, sind in der vorliegenden Offenbarung Nanoröhren zu verstehen, welche aus Kohlenstoff bestehen oder Kohlenstoff enthalten, beispielsweise einen Kohlenstoffanteil von 90 Gew.-% bis 98 Gew.-% haben. Beispielsweise sind die Kohlenstoffnanoröhren aus wabenartigen Gittern von Kohlenstoffatomen aufgebaut. Beispielsweise haben die Kohlenstoffnanoröhren einen Durchmesser zwischen 0,3 nm bis 100 nm, insbesondere zwischen 5 nm bis 50 nm, bevorzugt zwischen 10 nm bis 30 nm, beispielsweise 10 nm, 15 nm, 20 nm, 25 nm oder 30 nm.

Unter dem Begriff "Nanoflocken" sind in der vorliegenden Offenbarung flächige Nanostrukturen zu verstehen. Unter dem Begriff "Kohlenstoffnanoflocken" sind in der vorliegenden Offenbarung Nanoflocken zu verstehen, welche aus Kohlenstoff bestehen oder Kohlenstoff enthalten, beispielsweise einen Kohlenstoffanteil von 95 Gew.-% bis 99 Ge.w-% haben. Beispielsweise haben die Kohlenstoffnanoflocken eine Dicke von 1 nm bis 10 nm. Beispielsweise haben die Kohlenstoffnanoflocken eine laterale Ausdehnung zwischen 50 nm und 10 nm.

Unter dem Begriff "Ruß" ist in der vorliegenden Offenbarung ein Feststoff zu verstehen, welcher aus Kohlenstoff besteht oder Kohlenstoff aufweist. Beispielsweise hat der Ruß einen Kohlenstoffanteil zwischen 80 Gew.-% und 99,5 Gew.-%. Unter dem Begriff "Rußpartikel" sind in der vorliegenden Offenbarung Rußteilchen, zu verstehen.

Insbesondere haben die Rußpartikel eine mittlere Partikelgröße zwischen 10 nm und 100 nm, insbesondere zwischen 10 nm und 50 nm, bevorzugt zwischen 15 nm und 30 nm. Beispielsweise liegt die mittlere Partikelgröße bei einem Wert von 10 nm, 15 nm, 20 nm, 25 nm oder 30 nm.

Bevorzugt handelt es sich bei den Rußpartikeln um Partikel eines Leitfähigkeitsrußes, auch bezeichnet als Leitruß. Dieser Ruß weist eine elektrische Leitfähigkeit auf, insbesondere eine gegenüber anderen Rußarten erhöhte Leitfähigkeit, da er kleine Primärteilchen und weitverzweigte Aggregate hat.

Insbesondere haben die Rußpartikel einen Anteil zwischen 0,1 % und 13 %, insbesondere zwischen 0,5 % und 10 %, bevorzugt zwischen 1 % und 8 % haben, bezogen auf 100 Massenanteile des Polymers und trockenem Polymerkomposit. Beispielsweise liegt der Anteil der Rußpartikel bei 1 %, 2 %, 3 %, 4 %, 5 %, 6 %, 7 % oder 8 %, bezogen auf 100 Massenanteile des Polymers und trockenem Polymerkomposit. Untersuchungen haben gezeigt, dass durch einen solchen Anteil der Rußpartikel die vorstehend beschriebenen positiven Effekte erreicht werden.

Das Polymer kann ein einzelnes Polymer oder eine Mischung von Polymeren umfassen. Beispielsweise umfasst das Polymer wenigstens eine Wiederholungseinheit, welche aus einer Gruppe, bestehend aus oder enthaltend Acrylateinheiten, Carbonsäureestereinheiten, Amideinheiten, Milchsäureinheiten, Benzimidazoleinheiten, Carbonatestereinheiten, Ethereinheiten, Sulfoneinheiten, Arylketoneinheiten, Arylethereinheiten, Arylalkyleinheiten, Etherimideinheiten, Ethyleneinheiten, Phenylenoxideinheiten, Propyleneinheiten, Styroleinheiten, Vinylhalogenideinheiten und Carbamateinheiten, ausgewählt ist. Beispielsweise ist das Polymer ein Copolymer mit oder bestehend aus zwei oder mehr Wiederholungseinheiten, wie beispielsweise ein Blockcopolymer mit oder bestehend aus zwei oder mehr der vorstehend angegebenen Wiederholungseinheiten.

Beispielsweise umfasst das Polymer wenigstens ein Polymer, das aus einer Gruppe, enthaltend Polyacrylate, Polybenzimidazole (Kurzzeichen "PBI"), Polycarbonate (Kurzzeichen "PC"), Polyethersulfone, Polyaryletherketone (Kurzzeichen "PEK"), Polyethylene (Kurzzeichen "PE"), Polyphenylenoxide (Kurzzeichen "PPO"), Polypropylene (Kurzzeichen "PP"), Polystyrole (Kurzzeichen "PS"), Polyester, Polyurethane (Kurzzeichen "PUR"), Polyamide (Kurzzeichen "PA"), Polyvinylidenfluoride (Kurzzeichen "PVDF"), Polyvinylchloride (Kurzzeichen "PVC"), Polyetheretherketone (Kurzzeichen "PEEK"), Polydicyclopentadiene (Kurzzeichen "PDCPD"), Poly(ethylen-*co*-vinylacetate), Polyetherimide (Kurzzeichen "PEI"), Polypropylene (Kurzzeichen "PP"), Poly(vinylidenfluorid-*co*-hexafluorpropylene), Poly(styrol-isopren-styrole), AcrylnitrilButadien-Styrole (Kurzzeichen "ABS"), Poly(styrol-ethylen-butylen-styrole) (Kurzzeichen "SEBS"), Polyethylenterephthalate (Kurzzeichen "PET"), Polymilchsäuren (Kurzzeichen "PLA"), Polydiketoenamine (Kurzzeichen "PDK"), Poly(hydroxybutyrate-*co*-hydroxyhexanoate) (Kurzzeichen "PHBH") und Polycaprolactone (Kurzzeichen "PCL") oder daraus bestehend, ausgewählt ist.

Auch kann das Polymer aus einer Gruppe mit oder bestehend aus Polyacrylaten und einem Copolymer aus Acrylaten, wie beispielsweise Blockcopolymeren aus Acrylaten, ausgewählt sein. Die AcrylatCopolymere können mindestens ein Acrylatmonomer und gegebenenfalls ein oder mehrere zusätzliche Monomere umfassen, wie etwa jegliches der vorstehend angegebenen Monomere. Solche Polymere können vorgesehen sein, um einen gewünschten Grad von Flexibilität aufzuweisen. Auch kann das Polymer ein Polyester sein, wie beispielsweise ein Polycaprolacton.

Das Polymer kann in den vorgeschlagenen Polymerkompositen der vorliegenden Offenbarung in jeglicher geeigneten Menge enthalten sein, damit das Polymerkomposit in einem dreidimensionalen Druckprozess funktionsfähig ist. Beispiele von geeigneten Mengen umfassen einen Bereich zwischen 40 % und 99 %, insbesondere zwischen 75 % und 95 %, bevorzugt zwischen 79 % und 93 %, bezogen auf die trockene Gesamtmasse des Komposits.

Das vorgeschlagene Polymerkomposit kann jegliche weiteren Bestandteile in jeglichen erwünschten Mengen umfassen, wie beispielsweise Trägerflüssigkeiten, Weichmacher, Dispersionsmittel, Tenside und Farbstoffe.

Das vorgeschlagene Polymerkomposit kann in jeglicher geeigneten Form vorliegen. Das Polymerkomposit kann bei Raumtemperatur flüssig oder fest vorliegen. Beispielsweise ist das Polymerkomposit bei Raumtemperatur ein leitfähiges Granulat oder ein leitfähiges Pulver.

Beispielsweise ist das vorgeschlagene Polymerkomposit ein leitfähiger Harz. Der Harz kann ein flüssiger Harz bei Raumtemperatur sein oder ein Material, das erhitzt werden muss, um wie ein Harz zu fließen.

Beispielsweise ist das vorgeschlagene Polymerkomposit eine leitfähige Paste. Die Paste kann eine Paste bei Raumtemperatur sein oder ein Material, das erhitzt werden muss, um wie eine Paste zu fließen.

Beispielsweise liegt das vorgeschlagene Polymerkomposit in Form eines trockenen Komposits mit weniger als 5 Gew.-% flüssigem Träger vor, insbesondere weniger als 3 Gew.-% oder 2 Gew.-% oder 1 Gew.-% flüssigem Träger vor, bezogen auf das Gesamtgewicht des trockenen Polymerkomposits. Das trockene Komposit kann unter Verwendung eines Lösungsmittels formuliert werden, welches dann durch jegliches geeignete Verfahren entfernt wird, wie beispielsweise durch Erhitzen, Vakuum und/oder andere Techniken zum Entfernen von Flüssigkeit. Alternativ kann das Komposit ohne Trägerflüssigkeit unter Verwendung von reinen Verarbeitungstechniken hergestellt werden.

Eine Ausführungsform der vorliegenden Offenbarung richtet sich auf ein Granulat für einen 3D-Drucker, bestehend aus oder enthaltend das vorstehend beschriebene Polymerkomposit.

Eine weitere Ausführungsform der vorliegenden Offenbarung richtet sich auf eine Paste für einen 3D-Drucker, bestehend aus oder enthaltend das vorstehend beschriebene Polymerkomposit

Eine weitere Ausführungsform der vorliegenden Offenbarung richtet sich auf ein Filament, bestehend aus oder enthaltend das vorstehend beschriebene Polymerkomposit. Insbesondere ist das Filament ausgebildet, als Druckdraht in einem 3D-Drucker genutzt zu werden.

Eine weitere Ausführungsform der vorliegenden Offenbarung richtet sich auf ein Verfahren zum dreidimensionalen Drucken. Beispielsweise umfasst das Verfahren die Schritte oder besteht aus den Schritten:

i) Bereitstellen des vorstehend beschriebenen Polymerkomposits, vorzugsweise als Bestandteil oder in Ausbildung eines Filaments oder eines Granulats oder einer Paste;
ii) Erhitzen des Polymerkomposits;
iii) Extrudieren des erhitzten Polymerkomposits auf eine Bauplattform, um einen dreidimensionalen Gegenstand zu bilden.

Beispielsweise umfasst das Verfahren die Schritte oder besteht aus den Schritten:

i) Bereitstellen eines Filaments der vorstehend beschriebenen Art;
ii) Erhitzen des Filaments;
iii) Extrudieren des erhitzten Filaments auf eine Bauplattform, um einen dreidimensionalen Gegenstand zu bilden.

Durch das vorgeschlagene Verfahren ist es ermöglicht, einen dreidimensionalen Gegenstand zu erzeugen, welcher die vorstehend beschriebenen vorteilhaften Eigenschaften des vorgeschlagenen Polymerkomposits aufweist.

Eine weitere Ausführungsform der vorliegenden Offenbarung richtet sich auf ein Bauteil, enthaltend wenigstens ein Polymerkomposit der vorstehend beschriebenen Art, insbesondere hergestellt daraus. Beispielsweise ist das Bauteil mit dem vorstehend beschriebenen 3D-Druckverfahren gefertigt. Bei dem Bauteil kann es sich um ein Elektronikbauteil oder ein Sensorbauteil handeln.

Eine weitere Ausführungsform der vorliegenden Offenbarung richtet sich auf eine Verwendung des vorstehend beschriebenen Polymerkomposits zur Herstellung von elektrisch leitenden Bauteilen, insbesondere Elektronikbauteilen und Sensorbauteilen.

Beispiele

Nachfolgend werden die vorstehend umrissenen Konzepte anhand mehrerer exemplarischer Polymerkomposite erläutert.

Die exemplarischen Polymerkomposite wurden jeweils in der Art und Weise hergestellt, dass eine Polymerbasis (beispielsweise Polyamid) mit Kohlenstofffasern und Kohlenstoffnanostrukturen und/oder Rußpartikeln auf einem Doppelschneckenextruder der Firma Leistritz bei Umdrehungen zwischen 10 und 300 pro Minute schmelzvermischt und zu einem Filament extrudiert wurden. Das Schmelzvermischen und das Extrudieren erfolgte in einem einzigen Prozessvorgang mittels des eingesetzten Doppelschneckenextruders. Grundsätzlich können auch zwei oder mehr Prozessvorgänge durchgeführt werden, in denen beispielsweise zuerst die Schmelzvermischung erfolgt und das dann vorliegende Komposit abgekühlt und zerkleinert, beispielsweise geschreddert wird und anschließend mittels eines Presswerkzeugs, wie beispielsweise einem Extruder, zu einem Filament extrudiert wird.

Die Polymerbasis, die Kohlenstofffasern, die Nanostrukturen und die Rußpartikel wurden jeweils als Granulat bereitgestellt und in dieser Aufbereitungsform dem Doppelschneckenextruder zugeführt. Die bereitgestellten Kohlenstofffasern hatten eine mittlere Faserlänge von etwa 80 μm und einen Durchmesser von etwa 8 μm. Bei den bereitgestellten Kohlenstoffnanostrukturen handelte es sich um Kohlenstoffnanoröhren mit einem Durchmesser zwischen 10 nm und 50 nm. Die bereitgestellten Rußpartikel hatten eine mittlere Partikelgröße zwischen 10 nm und 50 nm und waren der Gruppe des Leitrußes zuzuordnen. Das erzeugte Filament war im Querschnitt rund, vorzugsweise kreisrund, und hatte einen Durchmesser von ca. 1,75 mm.

Um eine Beurteilung der angestrebten Eigenschaften vornehmen zu können, wurden die elektrische Volumenleitfähigkeit σ, die Zugfestigkeit Rm und die Druckbarkeit bestimmt.

Die elektrische Volumenleitfähigkeit σ wurde anhand der Formel

$$\sigma = L / (R \bullet A)$$

berechnet, wobei

L    die Länge eines gedruckten Längenabschnitts des erzeugten Filaments,
R    der gemessene Widerstand des gedruckten Längenabschnitts und
A    die Querschnittsfläche des gedruckten Längenabschnitts

definieren. Der gedruckte Längenabschnitt wurde von einem 3D-Drucker erzeugt, dessen Druckdüse einen Durchmesser von 0,4 mm hatte. Der gedruckte Längenabschnitt hatte, im Querschnitt gesehen, eine Breite von etwa 2 mm und eine Höhe von etwa 1 mm. Die Länge des gedruckten Längenabschnitts betrug etwa 1000 mm. Die Enden des gedruckten Längenabschnitts wurden an einen vorzugsweise digitalen Multimeter angeschlossen und darüber der Widerstand R gemessen.

Die Zugfestigkeit Rm wurde als Maß für die mechanische Bauteilfestigkeit herangezogen. Die Zugfestigkeit Rm wurde im Zugversuch nach ISO 527-1 ermittelt. Dabei wurde eine definierte Zugprobe genutzt, welche mit dem erzeugten Filament gedruckt worden war. Die Zugprobe hatte eine längliche Kontur angelehnt an den Typ 1A nach ISO 527-1. Die Kontur der Zugprobe wurde in der Art und Weise erzeugt, dass die Richtung der Druckbahn der Druckdüse des 3D-Druckers quer, insbesondere orthogonal zur Längserstreckung der Zugprobe war und die von der Drückdüse erzeugten Druckschichten die Längserstreckung der Zugprobe erzeugten.

Die Druckbarkeit wurde mit einem eigens entwickelten Genauigkeitstest beurteilt. Der Genauigkeitstest beruht darauf, dass ein Prüfkörper nach vorgegeben Abmessungen gedruckt wird, anschließend der gedruckte Prüfkörper vermessen wird und auf Basis festgestellter Abweichungen zwischen einem Istmaß und einem Sollmaß dann eine Bewertung zur Druckbarkeit vorgenommen wird.

Der Prüfkörper wurde von einem 3D-Drucker oder dem vorstehend bereits genutzten 3D-Drucker erzeugt, wobei eine Druckdüse mit einem Durchmesser von 0,4 mm eingesetzt wurde. Nach dem Drucken des Prüfkörpers wurde mit dem Einmessen solange gewartet, bis der Prüfkörper auf Umgebungstemperatur abgekühlt war. Vor dem Einmessen wurde der Prüfkörper von der Druckplatte des eingesetzten Druckers entnommen.

Der Prüfkörper hatte drei aneinander angrenzende, ebene Wandungen, welche senkrecht zueinander vorlagen. Der Prüfkörper hatte also die Form eines Eckbereichs eines Quaders, wobei die Wandungen jeweils Abschnitte der Seitenflächen des Quaders bildeten. Für die Bewertung der Druckbarkeit wurden folgende Kriterien herangezogen:

- Abweichung des Istwertes gegenüber dem Sollwert hinsichtlich wenigstens einer ausgewählten Kantenlänge des Prüfkörpers,
- Abweichung des Istwertes gegenüber dem Sollwert hinsichtlich der Winkellage von wenigstens zwei der Wandungen des Prüfkörpers,
- Abweichung des Istwertes gegenüber dem Sollwert hinsichtlich einer vollflächigen Auflage wenigstens einer außenseitigen Seitenfläche des Prüfkörpers.

Nach diesen Kriterien wurde bewertet, ob und inwieweit eine Druckbarkeit vorlag. Dabei wurde unterschieden zwischen "nicht druckbar", "druckbar", "gut druckbar" und "besonders gut druckbar".

Bei den exemplarischen Polymerkompositen handelt es sich um eine Auswahl von insgesamt zehn Kompositen, welche nachfolgend als "K1" bis "K10" bezeichnet sind. Die exemplarischen Polymerkomposite hatten einen Polymeranteil von 15 % bis 19 % an der trockenen Gesamtmasse des Komposits. Im Einzelnen waren dies die folgenden Massenanteile: ca. 19 % bei K1, ca. 18 % bei K2, ca. 18 % bei K3, ca. 17% bei K4, ca. 16 % bei K5, ca. 16 % bei K6, ca. 15 % bei K7, ca. 18 % bei K8, ca. 18 % bei K9 und ca. 17 % bei K10.

Alle zehn exemplarischen Polymerkomposite hatten die vorstehend beschriebenen Kohlenstofffasern und zwar in einem Anteil von 9 % bis 17 % an der trockenen Gesamtmasse des Komposits. Im Einzelnen waren dies die folgenden Massenanteile: ca. 10 % bei K1, ca. 17 % bei K2, ca. 16 % bei K3, ca. 14 % bei K4, ca. 10 % bei K5, ca. 13 % bei K6, ca. 10 % bei K7, ca. 9 % bei K8, ca. 10 % bei K9 und ca. 10 % bei K10.

Eines der exemplarischen Polymerkomposite, nämlich das Komposit K1, hatte die vorstehend beschriebenen Rußpartikel, aber keine Kohlenstoffnanostrukturen. Der Anteil der Rußpartikel lag bei ca. 9 %, bezogen auf die trockene Gesamtmasse des Komposits K1.

Weitere vier der exemplarischen Polymerkomposite, nämlich die Komposite K2, K3, K4 und K5, hatten die vorstehend beschriebenen Kohlenstoffnanostrukturen, aber keine Rußpartikel. Der Anteil der Kohlenstoffnanostrukturen an der trockenen Gesamtmasse des Komposits lag zwischen 1 % und 6 %. Im Einzelnen waren dies die folgenden Massenanteile: ca. 1 % bei K2, ca. 2 % bei K3, ca. 3 % bei K4 und ca. 6 % bei K5.

Die verbleibenden fünf exemplarischen Polymerkomposite, nämlich die Komposite K6, K7, K8, K9 und K10, hatten die vorstehend beschriebenen Kohlenstoffnanostrukturen und die vorstehend beschriebenen Rußpartikel. Der Anteil der Kohlenstoffnanostrukturen an der trockenen Gesamtmasse des Komposits lag zwischen 1 % und 6 %. Im Einzelnen waren dies die folgenden Massenanteile: ca. 1 % bei K6, ca. 2 % bei K7, ca. 6 % bei K8, ca. 2 % bei K9 und ca. 4 bei K10. Der Anteil der Rußpartikel an der trockenen Gesamtmasse des Komposits lag zwischen 2 % und 6 %. Im Einzelnen waren dies die folgenden Massenanteile: ca. 2 % bei K6, ca. 3 % bei K7, ca. 3 % bei K8, ca. 6 % bei K9 und ca. 3 % bei K10.

Die hier betrachteten exemplarischen Polymerkomposite hatten jeweils eine elektrische Volumenleitfähigkeit, die in einem vorgegebenen Zielbereich lag. Als Zielbereich wurde eine elektrische Volumenleitfähigkeit zwischen $10^{-7}$ S/cm und 1 S/cm zugrunde gelegt. Auch hatten die hier betrachteten exemplarischen Polymerkomposite jeweils eine Zugfestigkeit, die über einem vorgegebenen Mindestwert lag. Als Mindestwert wurde eine Zugfestigkeit von 15 MPa zugrunde gelegt. Darüber hinaus wurden die hier betrachteten exemplarischen Polymerkomposite jeweils mindestens in die Kategorie "druckbar" eingestuft.

Eine Übersicht über die zu den exemplarischen Polymerkompositen K1 bis K10 ermittelten Eigenschaften gibt Tabelle 1. Darin sind in den letzten drei Spalten die ermittelten Werte für die elektrische Volumenleitfähigkeit σ, die Zugfestigkeit Rm und die Druckbarkeit (Spalte mit der Bezeichnung "druckbar") angegeben. Der Einfachheit halber wurden die Kategorien "druckbar", "gut druckbar" und "besonders gut druckbar" durch Pluszeichen abgekürzt. Ein Pluszeichen ("+") bedeutet "druckbar", zwei Pluszeichen ("++") bedeuten "gut druckbar" und drei Pluszeichen bedeuten "besonders gut druckbar".

Die in den exemplarischen Kompositen enthaltenen Kohlenstofffasern, Kohlenstoffnanoröhren und Rußpartikel sind in den Spalten 2 bis 4 angegeben und mit "Faser", "Nano" und "Ruß" bezeichnet. Dabei ist jeweils der Massenanteil in Prozent bezogen auf den Massenanteil des eingesetzten Polymers P in Prozent, also "% / % P", angegeben. Dem entspricht die in der vorliegenden Offenbarung auch verwendete Angabe "% bezogen auf 100 Massenanteile des Polymers".

Tabelle 1

| Kompos it | Faser [%/% P] | Nano [%/% P] | Ruß [%/% P] | σ [S/cm] | Rm [MPa] | druckbar |
|---|---|---|---|---|---|---|
| K1 | 12 | 0 | 12 | 0,001 | 29 | ++ |
| K2 | 21 | 1,2 | 0 | 0,0001 | 35 | ++ |
| K3 | 20 | 2, 4 | 0 | 0,010 | 31 | +++ |
| K4 | 17 | 3, 6 | 0 | 0,033 | 27 | +++ |
| K5 | 12 | 7,0 | 0 | 0,203 | 20 | ++ |
| K6 | 15 | 1,2 | 2, 4 | 0,001 | 36 | ++ |
| K7 | 12 | 2, 4 | 3,5 | 0,018 | 36 | ++ |
| K8 | 11 | 7,3 | 3,7 | 0,157 | 18 | + |
| K9 | 12 | 2, 4 | 7,3 | 0,136 | 35 | ++ |
| K10 | 12 | 4, 8 | 3, 6 | 0,195 | 22 | +++ |

Die in der vorliegenden Offenbarung beschriebenen Polymerkomposite enthalten beispielsweise wenigstens ein Polymer und Kohlenstofffasern und Kohlenstoffnanostrukturen und/oder Rußpartikel. Die vorliegende Offenbarung gibt Ausführungsformen an, in denen keine Kohlenstoffnanostrukturen enthalten sind, die besagte Ausführungsform also frei von Kohlenstoffnanostrukturen sind. Unter dem Begriff "frei von Kohlenstoffnanostrukturen" ist in der vorliegenden Offenbarung auch zu verstehen, dass der Anteil der Kohlenstoffnanostrukturen kleiner als 0,1 % an der trockenen Gesamtmasse des Polymerkomposits ist.

Die vorliegende Offenbarung gibt Ausführungsformen an, in denen keine Rußpartikel enthalten sind, die besagte Ausführungsform also frei von Rußpartikeln ist. Unter dem Begriff "frei von Rußpartikeln" ist in der vorliegenden Offenbarung auch zu verstehen, dass der Anteil der Rußpartikel kleiner als 0,1 % an der trockenen Gesamtmasse des Polymerkomposits ist.

Auch wenn die numerischen Bereiche und Parameter, die den weiten Bereich der vorliegenden Offenbarung darlegen, Annäherungen sind, werden die in den spezifischen Beispielen dargelegten numerischen Werte so genau wie möglich wiedergegeben. Jeder numerische Wert umfasst jedoch inhärent bestimmte Fehler, die notwendigerweise aus der Standardabweichung resultieren, die sich bei den jeweiligen Prüfungsmessungen findet. Darüber hinaus sind alle hierin beschriebenen Bereiche so zu verstehen, dass auch die Eckwerte selbst für den jeweiligen Bereich mitumfasst sind und die beschriebenen Bereiche alle beliebigen darin subsumierten Unterbereiche einschließen.

**Einheitenliste**

| S | Siemens |
| nm | Nanometer |
| $\mu$m | Mikrometer |
| mm | Millimeter |
| cm | Zentimeter |
| % | Prozent |
| Gew.-% | Gewichtsprozent |
| %/% P | Masseprozent pro Masseprozent Polymer |
| S/cm | Siemens pro Zentimeter |
| MPa | Megapascal |

**Patentansprüche**

1. Polymerkomposit mit einer elektrischen Volumenleitfähigkeit zwischen $10^{-7}$ S/cm und 1 S/cm, bestehend aus oder enthaltend

   • ein vorzugsweise thermoplastisches Polymer,
   • Kohlenstofffasern und
   • Kohlenstoffnanostrukturen und/oder Rußpartikel.

2. Komposit nach Anspruch 1, wobei die Kohlenstofffasern eine mittlere Faserlänge zwischen 20 $\mu$m und 2 mm aufweisen.

3. Komposit nach Anspruch 1 oder 2, wobei die Kohlenstofffasern einen Durchmesser zwischen 5 $\mu$m und 20 $\mu$m aufweisen.

4. Komposit nach einem der vorhergehenden Ansprüche, wobei die Kohlenstofffasern einen Anteil zwischen 5 % und 26 % haben, bezogen auf 100 Massenanteile des Polymers.

5. Komposit nach einem der vorhergehenden Ansprüche, wobei die Kohlenstoffnanostrukturen einen Anteil zwischen 0,1 % und 12 % haben, bezogen auf 100 Massenanteile des Polymers.

6. Komposit nach einem der vorhergehenden Ansprüche, wobei zumindest eine Teilmenge der Kohlenstoffnanostrukturen als Röhren ausgebildet ist.

7. Komposit nach einem der vorhergehenden Ansprüche, wobei zumindest eine Teilmenge der Kohlenstoffnanostrukturen als Flocken ausgebildet ist.

8. Komposit nach einem der vorhergehenden Ansprüche, wobei die Rußpartikel eine mittlere Partikelgröße zwischen 10 nm und 100 nm haben.

9. Komposit nach einem der vorhergehenden Ansprüche, wobei die Rußpartikel der Rußart des Leitfähigkeitsrußes zuzuordnen sind.

10. Komposit nach einem der vorhergehenden Ansprüche, wobei die Rußpartikel einen Anteil zwischen 0,1 % und 13 % haben, bezogen auf 100 Massenanteile des Polymers.

11. Komposit nach einem der vorhergehenden Ansprüche, wobei das Polymer einen Massenanteil zwischen 40 % und 99 % hat, bezogen auf die trockene Masse des Komposits.

12. Komposit nach einem der vorhergehenden Ansprüche, wobei das Polymer mindestens ein Polymer umfasst, das aus der Gruppe, enthaltend oder daraus bestehend Polyacrylate, Polybenzimidazole, Polycarbonate, Polyethersulfone, Polyaryletherketone, Polyethylene, Polyphenylenoxide, Polypropylene, Polystyrole, Polyester, Polyurethane, Polyamide, Polyvinylidenfluoride, Polyvinylchloride, Polyetheretherketone, Polydicyclopentadiene, Poly(ethylen-*co*-vinylacetate), Polyetherimide, Polypropylene, Poly(vinylidenfluorid-*co*-hexafluorpropylene), Poly(styrol-isopren-styrole), AcrylnitrilButadien-Styrole, Poly(styrol-ethylen-butylen-styrole), Polyethylenterephthalate, Polymilchsäuren, Polydiketoenamine, Poly(hydroxybutyrate-*co*-hydroxyhexanoate) und Polycaprolactone, ausgewählt ist.

13. Granulat oder Paste für einen 3D-Drucker, bestehend aus oder enthaltend ein Komposit nach einem der Ansprüche 1 bis 12.

14. Filament, bestehend aus oder enthaltend ein Komposit nach einem der Ansprüche 1 bis 12 und ausgebildet, als Druckdraht in einem 3D-Drucker genutzt zu werden.

15. Verfahren zum dreidimensionalen Drucken, umfassend die Schritte:

i) Bereitstellen eines Komposits nach einem der Ansprüche 1 bis 12, vorzugsweise als Bestandteil oder in Ausbildung eines Filaments oder eines Granulats oder einer Paste;
ii) Erhitzen des Komposits;
iii) Extrudieren des erhitzten Komposits auf eine Bauplattform, um einen dreidimensionalen Gegenstand zu bilden.

16. Bauteil, enthaltend wenigstens ein Komposit nach einem der Ansprüche 1 bis 12.

17. Verwendung eines Komposits nach einem der Ansprüche 1 bis 12 zur Herstellung von elektrisch leitenden Bauteilen, insbesondere Elektronikbauteilen und Sensorbauteilen.

Europäisches
Patentamt

European
Patent Office

Office européen
des brevets

# EUROPÄISCHER RECHERCHENBERICHT

Nummer der Anmeldung

EP 25 20 2854

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SG 172 533 A1 (CHEIL IND INC [KR]) 28. Juli 2011 (2011-07-28) * Zusammenfassung; Anspruch 1; Abbildungen 2-4 * * Seite 7, Absatz 2 * ----- | 1,6,12, 16 | INV. B29C64/00 B33Y10/00 B33Y70/00 |
| X | WO 2019/079471 A1 (TCPOLY INC [US]) 25. April 2019 (2019-04-25) * Zusammenfassung; Ansprüche 1,3,4,23,27; Abbildung 1 * * Absatz [0082] * ----- | 1,6, 12-17 | |
| X | US 2019/092924 A1 (CHOI SEUNG WOO [KR] ET AL) 28. März 2019 (2019-03-28) * Zusammenfassung; Ansprüche 1,7,14 * ----- | 1-13,16, 17 | |

RECHERCHIERTE SACHGEBIETE (IPC)

B33Y
B29C
C08K

Der vorliegende Recherchenbericht wurde für alle Patentansprüche erstellt

| Recherchenort | Abschlußdatum der Recherche | Prüfer |
|---|---|---|
| München | 29. Januar 2026 | Schütte, Maya |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 2854

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2026

| Im Recherchenbericht angeführtes Patentdokument | Datum der Veröffentlichung | Mitglied(er) der Patentfamilie | Datum der Veröffentlichung |
|---|---|---|---|
| SG 172533 A1 | 28-07-2011 | KR 20110078205 A | 07-07-2011 |
| | | SG 172533 A1 | 28-07-2011 |
| | | TW 201122054 A | 01-07-2011 |
| | | US 2011155965 A1 | 30-06-2011 |
| WO 2019079471 A1 | 25-04-2019 | US 2020248014 A1 | 06-08-2020 |
| | | WO 2019079471 A1 | 25-04-2019 |
| US 2019092924 A1 | 28-03-2019 | CN 109553962 A | 02-04-2019 |
| | | KR 20190035031 A | 03-04-2019 |
| | | US 2019092924 A1 | 28-03-2019 |

EPO FORM P0461

Für nähere Einzelheiten zu diesem Anhang : siehe Amtsblatt des Europäischen Patentamts, Nr.12/82